# EUROPEAN PATENT APPLICATION

(11) **EP 4 439 816 A1**
(43) Date of publication of application: **02.10.2024**
(21) Application number: 23765984.2
(22) Date of filing: 07.03.2023
(51) Int. Cl.: H01M 50/202

(54) **BATTERY MODULE, BATTERY PACK, AND VEHICLE**

(30) Priority: 07.03.2022 CN 202220482834 U
(71) Applicant: BYD Company Limited, Shenzhen, Guangdong 518118 (CN)
(72) Inventor: LU, Wenhao, Shenzhen, Guangdong 518118 (CN); NIE, Chengming, Shenzhen, Guangdong 518118 (CN); XIONG, Zhonghua, Shenzhen, Guangdong 518118 (CN); TAN, Jing, Shenzhen, Guangdong 518118 (CN)
(74) Representative: Arnold & Siedsma
(86) International application number: PCT/CN2023/080041
(87) International publication number: WO 2023/169406

(57) **Abstract**

A battery module, a battery pack, and a vehicle are provided. The battery module includes a battery core assembly and a sampling assembly. Two opposite ends of a battery core of the battery core assembly are provided with terminals. Multiple battery cores are sequentially connected in series through connection sheets. The connection sheet connected to a positive electrode of each of the battery cores is electrically connected to a housing of the corresponding battery core on a positive electrode side of the battery core assembly. The housing on a negative electrode side of the battery core assembly is electrically connected to the connection sheet through the sampling assembly.

## Description

### CROSS-REFERENCE TO RELATED APPLICATIONS

The present disclosure claims priority to Chinese Patent Application No. 202220482834.0 filed with the National Intellectual Property Administration on March 7, 2022 and entitled "BATTERY MODULE, BATTERY PACK, AND VEHICLE". The entire content of the above-referenced application is incorporated herein by reference.

### FIELD

The present disclosure relates to the technical field of battery structures, and specifically, the present disclosure relates to a battery module, a battery pack, and a vehicle.

### BACKGROUND

At present, lithium ion batteries have the advantages of high working voltage, high specific energy, long cycle life, no environmental pollution, and the like, are not only widely applied to mobile communication devices and portable electronic devices, but also widely applied to large and medium-sized electric devices such as electric automobiles, electric bicycles, and electric tools, and are main directions of development for major battery manufacturers at present.

Multiple battery cores are generally arranged inside a lithium ion battery. The battery core provided with terminals at two ends need to be sampled at both ends of the battery core, which increases structural complexity and structural cost of sampling. Moreover, a housing of the battery core is generally not charged or has a low voltage, so that an electrolyte in the battery core easily corrodes the housing and assemblies on the housing, which easily causes a problem of electrolyte leakage of the battery core, and affects the use safety of the lithium ion battery.

Therefore, it is necessary to improve a structure of the lithium ion battery to improve the overall safety performance of the lithium ion battery.

### SUMMARY

An objective of embodiments of the present disclosure is to provide a new technical solution of a battery module, a battery pack, and a vehicle.

According to a first aspect of the present disclosure, a battery module is provided, including:
a battery core assembly, where the battery core assembly includes multiple battery cores, two opposite ends of each battery core of the multiple battery cores are provided with terminals, the multiple battery cores are sequentially connected in series through connection sheets, each battery core includes a housing, and the connection sheet connected to a positive electrode of each battery core is electrically connected to the housing of the corresponding battery core on a positive electrode side of the battery core assembly; and
a sampling assembly, where the housing on a negative electrode side of the battery core assembly is electrically connected to the connection sheet through the sampling assembly.

Optionally, the sampling assembly includes a sampling portion. The sampling portion includes a sampling terminal and an output terminal. The sampling terminal is electrically connected to the housing and/or the connection sheet.

Optionally, welding portions are arranged on the housing. The sampling portion is electrically connected to the welding portions through the sampling terminal.

Optionally, the sampling terminal includes a first sampling terminal and a second sampling terminal. The first sampling terminal is electrically connected to the welding portions and one of the connection sheets. The second sampling terminal is electrically connected to another welding portion.

Optionally, the first sampling terminal includes a first connection segment and a second connection segment. The sampling portion is electrically connected to the welding portion through the first connection segment. The connection sheet is electrically connected to the welding portion through the second connection segment.

Optionally, the first sampling terminal is configured to collect information in the battery core by the sampling portion through the welding portion, and to apply a voltage to the housing through the connection sheet; and
the second sampling terminal is configured collect the information in the battery core by the sampling portion through the welding portion.

Optionally, the sampling assembly includes a protection portion. One end of the protection portion is electrically connected to the sampling terminal and the welding portion, and the other end of the protection portion is connected to the connection sheet.

Optionally, the sampling portion and the protection portion are at least one of a flexible printed circuit (FPC) or a printed circuit board (PCB).

Optionally, the sampling portion (4) and the protection portion (5) are integrally formed. Optionally, the sampling portion is arranged at a top side of the battery core assembly, and the protection portion is arranged parallel to the sampling portion.

Optionally, the sampling portion is perpendicular to the protection portion.

Optionally, the protection portion is arranged on one side of the battery core assembly provided with the terminal.

Optionally, the sampling portion is a first flexible connection member, and the first flexible connection member is inserted into and matches a sampler.

Optionally, the protection portion is a second flexible connection member, and a protection circuit connected to the connection sheet and the housing is arranged in the second flexible connection member.

Optionally, the protection circuit includes a fuse protector or a fuse wire.

Optionally, a frame is further included; and
the multiple battery cores are arranged in the frame side by side.

According to a second aspect of the present disclosure, a battery pack is provided, including the battery module described in the first aspect.

According to a third aspect of the present disclosure, a vehicle is provided, including the battery module described in the first aspect or the battery pack described in the second aspect.

A technical effect of embodiments of the present disclosure is as follows:

The embodiments of the present disclosure provide a battery module. The battery module includes a battery core assembly and a sampling assembly. After a voltage is applied to the housing through the sampling assembly, that is, the housing has the voltage, the damage caused by infiltrating the housing by an electrolyte in the battery core can be reduced, the integrity and stability of the housing are ensured, and the use safety of the battery module is improved. In addition, the sampling portion may sample on a single side, which simplifies a structure of the sampling portion, and reduces the design cost of the sampling portion.

Other features and advantages of the present disclosure will become clear through the following detailed description of exemplary embodiments of the present disclosure with reference to accompanying drawings.

### BRIEF DESCRIPTION OF THE DRAWINGS

Accompanying drawings that are incorporated into and constitute a part of this specification show embodiments of the present disclosure, and are used together with this specification to explain a principle of the present disclosure.
FIG. 1 is a three-dimensional diagram of a battery module according to an embodiment of the present disclosure;
FIG. 2 is an exploded view of a battery module according to an embodiment of the present disclosure;
FIG. 3 is a first schematic diagram of one end of a battery module according to an embodiment of the present disclosure;
FIG. 4 is a first schematic diagram of the other end of a battery module according to an embodiment of the present disclosure;
FIG. 5 is a second schematic diagram of one end of a battery module according to an embodiment of the present disclosure;
FIG. 6 is a second schematic diagram of the other end of a battery module according to an embodiment of the present disclosure;
FIG. 7 is a first schematic diagram of matching of a sampling portion and a protection portion of a battery module according to an embodiment of the present disclosure;
FIG. 8 is a second schematic diagram of matching of a sampling portion and a protection portion of a battery module according to an embodiment of the present disclosure;
FIG. 9 is a third schematic diagram of matching of a sampling portion and a protection portion of a battery module according to an embodiment of the present disclosure;
FIG. 10 is a fourth schematic diagram of matching of a sampling portion and a protection portion of a battery module according to an embodiment of the present disclosure;
FIG. 11 is a schematic diagram of a battery pack according to an embodiment of the present disclosure; and
FIG. 12 is a schematic diagram of a vehicle according to an embodiment of the present disclosure.

In the drawings:
1, frame; 11, lower plate; 12, upper plate; 13, side plate; 14, accommodation cavity; 2, battery core; 21, housing; 22, explosion-proof valve; 23, terminal; 3, connection sheet; 4, sampling portion; 41, sampling terminal; 411, first sampling terminal; 411a, first connection segment; 411b, second connection segment; 412, second sampling terminal; 42, output terminal; 5, protection portion; 6, sampler; 7, welding portion; 100, battery module; 200, battery pack; 300, vehicle; P, positive electrode side of battery core assembly; and N, negative electrode side of battery core assembly.

### DETAILED DESCRIPTION

Various exemplary embodiments of the present disclosure are now described in detail with reference to accompanying drawings. It is to be noted that: unless otherwise specified, relative arrangement, numerical expressions, and numerical values of components and steps described in these embodiments do not limit scope of the present disclosure.

The following descriptions of at least one exemplary embodiment are merely illustrative, and in no way constitute any limitation on the present disclosure and application or use of the present disclosure.

Technologies, methods, and devices known to those of ordinary skill in related arts may not be discussed in detail, but where appropriate, the technologies, the methods, and the devices are to be considered as a part of the specification.

In all examples shown and discussed herein, any specific value are merely to be construed as examples but not limitations. Therefore, other examples of exemplary embodiments may have different values.

It is to be noted that: similar reference signs and letters represent similar items in the following drawings. Therefore, once an item is defined in a drawing, it is not required to be further discussed in subsequent drawings.

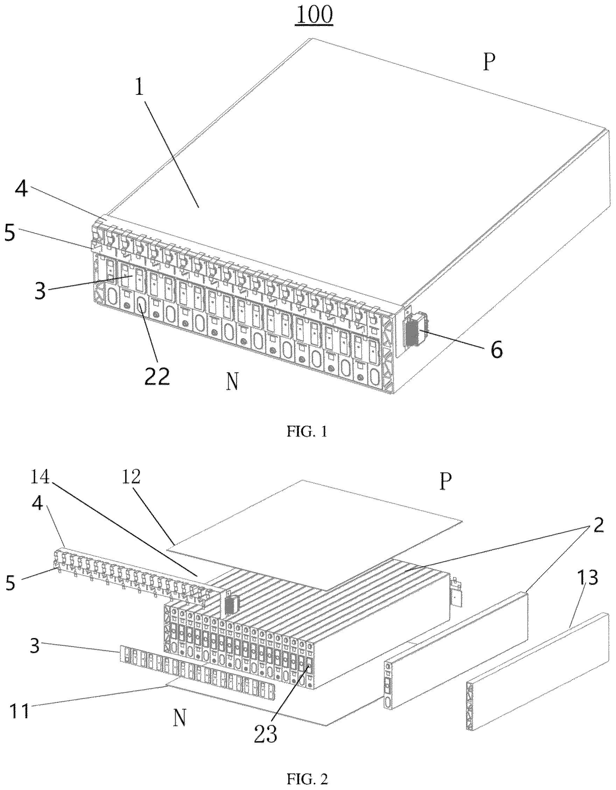

Referring to FIG. 1 to FIG. 10, embodiments of the present disclosure provide a battery module 100. The battery module 100 may be applied to a power battery of an electric vehicle. The battery module 100 includes:
a battery core assembly and a sampling assembly. The sampling assembly is configured to sample battery core information of the battery core assembly, for example, sampling a temperature, a pressure, an electrolyte storage capacity, and the like of the battery core assembly, so as to ensure stable performance of the battery module 100.

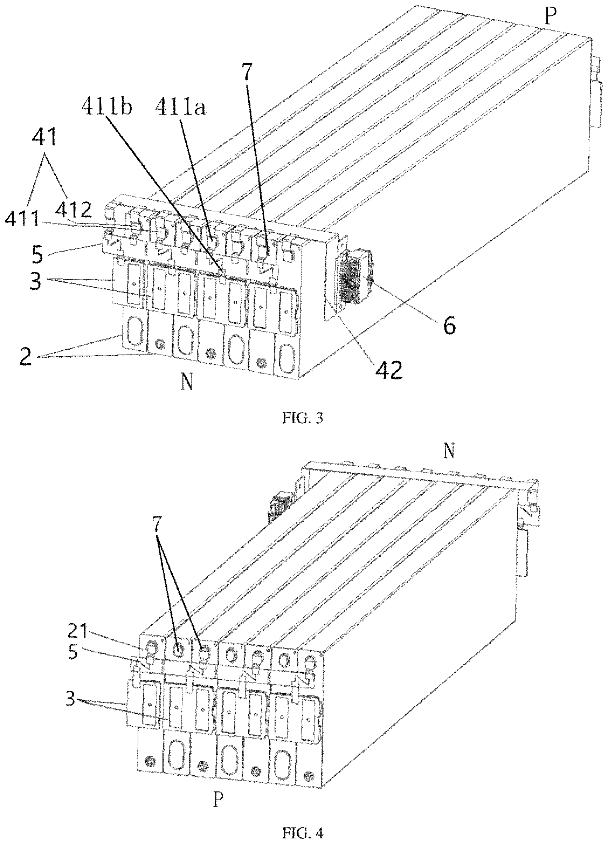

Referring to FIG. 2 and FIG. 3, the battery core assembly includes multiple battery cores 2. Two opposite ends of the battery core 2 are provided with terminals. Positive and negative electrodes may sequentially alternate at one end of the multiple battery cores 2, and positive and negative electrodes may sequentially alternate at the other end of the multiple battery cores 2, so as to facilitate series connection of the multiple battery cores 2, as shown in FIG. 1.

Referring to FIG. 1 to FIG. 3, the multiple battery cores 2 are sequentially connected in series through connection sheets 3. Two opposite ends of the battery core 2 are provided with the terminals, that is, the multiple connection sheets 3 are arranged at both ends of the battery core assembly. The battery core 2 includes a housing 21. An explosion-proof valve 22 may be arranged on the housing 21. Continuing to refer to FIG. 4, the connection sheet 3 connected to a positive electrode of each battery core 2 is electrically connected to a housing 21 of the corresponding battery core 2 on a positive electrode side P of the battery core assembly. Specifically, a portion on each connection sheet 3 electrically connected to a positive electrode of the battery core 2 is connected to the housing 21 of the corresponding battery core 2. The connection sheet 3 applies a voltage to the housing 21 of the battery core 2, that is, the housing 21 and the explosion-proof valve 22 have the voltage, an electric potential of the housing 21 and the explosion-proof valve 22 is improved, and the housing 21 and the explosion-proof valve 22 are protected.

Referring to FIG. 2 and FIG. 3, the housing 21 on a negative electrode side N of the battery core assembly is electrically connected to the connection sheet 3 through the sampling assembly, so that the sampling portion 4 may protect the electric potential of the housing 21 on the basis of collecting the battery core information such as a temperature, a pressure, and an electrolyte storage capacity of each battery core 2. Specifically, after the multiple battery cores 2 are sequentially connected in series through the connection sheets 3, a total positive terminal and a total negative terminal directly connected to the outside may be formed. A side where the total positive terminal is located is the positive electrode side P of the battery core assembly, and a side where the total negative terminal is located is the negative electrode side N of the battery core assembly.

Specifically, the explosion-proof valve 22 may be made of a thin aluminum material. After a voltage is applied to the housing 21 through the connection sheet 3, that is, the explosion-proof valve 22 on the housing 21 has the voltage, the damage caused by infiltrating the housing 21 and the explosion-proof valve 22 by an electrolyte in the battery core 2 can be reduced, the integrity and stability of the housing 21 and the explosion-proof valve 22 are ensured, and the use safety of the battery module 100 is improved. Moreover, the sampling assembly may sample on a single side, that is, the sampling assembly is only arranged on one side of the battery core assembly, which simplifies a structure of the sampling assembly, and reduces the design cost of the sampling assembly.

The battery module 100 provided by the embodiments of the present disclosure includes a battery core assembly and a sampling assembly. The battery core assembly includes multiple battery cores 2. Two opposite ends of the battery core 2 are provided with the terminals. The multiple battery cores 2 are sequentially connected in series through connection sheets 3. The battery core 2 includes a housing 21. The connection sheet 3 connected to a positive electrode of each of the battery cores 2 is electrically connected to the housing 21 of the corresponding battery core 2. After a voltage is applied to the housing 21 through the sampling assembly, that is, the housing 21 has the voltage, the damage caused by infiltrating the housing 21 by an electrolyte in the battery core 2 can be reduced, the integrity and stability of the housing 21 are ensured, and the use safety of the battery module 100 is improved. In addition, the housing 21 of the battery core 2 is charged, and then the sampling assembly may sample on a single side, which simplifies a structure of the sampling assembly, and reduces the design cost of the sampling assembly.

Optionally, referring to FIG. 1 to FIG. 3, the sampling assembly includes a sampling portion 4. The sampling portion 4 includes a sampling terminal 41 and an output terminal 42. The sampling terminal 41 is electrically connected to the housing 21 and/or the connection sheet 3.

Specifically, the sampling portion 4 is electrically connected to the housing 21 through the sampling terminal 41, and the output terminal 42 is connected to an external sampling device, so as to collect and transmit the battery core information such as a temperature, a pressure, and an electrolyte storage capacity of the battery core 2 to an external sampling device, and then process and monitor the information to ensure operating stability of the battery module 100. When the sampling terminal 41 is electrically connected to the connection sheet 3, the housing 21 may be charged through the connection sheet 3, which ensures integrity and stability of the housing 21.

Optionally, welding portions 7 are arranged on the housing 21, and the sampling portion 4 is electrically connected to the welding portions 7 through the sampling terminal 41.

Specifically, one end of the sampling terminal 41 may overlap on a sampling main body of the sampling portion 4, and the other end or a middle position of the sampling terminal 41 may be welded on the welding portion 7 of the housing 21. The welding portion 7 may be specifically a welding spot set on the housing 21, so as to weld the sampling terminal 41 and the housing 21. Through the welding portion 7, the housing 21 may be electrically connected to the sampling portion 4 through the sampling terminal 41. By means of characteristics of high welding speed, low thermal deformation, high density, and the like of the sampling terminal 41, the sampling portion 4 may be ensured to effectively collect the battery core information of each of the battery cores 2, such as a temperature, a pressure, and an electrolyte storage capacity.

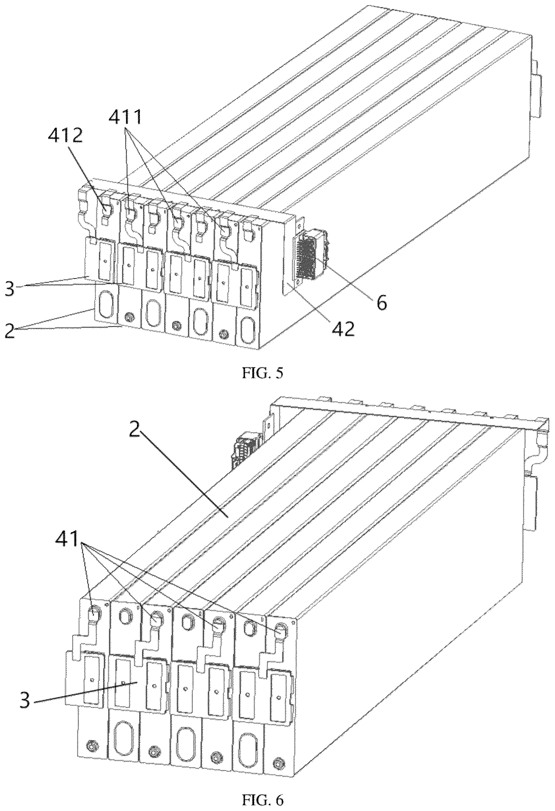

Optionally, referring to FIG. 3 and FIG. 6, the sampling terminal 41 includes a first sampling terminal 411 and a second sampling terminal 412. The first sampling terminal 411 is electrically connected to the welding portion 7 and the connection sheet 3. The second sampling terminal 412 is electrically connected to the welding portion 7.

When the housing 21 on a negative electrode side N of the battery core assembly is electrically connected to the connection sheet 3 through the sampling assembly, the welding portion 7 may be electrically connected to the connection sheet 3 through the first sampling terminal 411. That is, the first sampling terminal 411 can achieve collection of the information in the battery core 2 by the sampling portion 4 through the welding portion 7, and can apply the voltage to the housing 21 through the connection sheet 3. Part sampling terminals of the sampling terminals 41 only need to collect the information in the battery core 2, alternatively the second sampling terminal 412 may be connected to the welding portion 7 only. The second sampling terminal 412 achieves collection of the information in the battery core 2 by the sampling portion 4 through the welding portion 7, which simplifies a structure of the sampling terminal 41. The connection sheet 3 may be electrically connected to the housing 21 through an assembly provided with a protection circuit.

Optionally, the first sampling terminal 411 includes a first connection segment 411a and a second connection segment 411b, the sampling portion 4 is electrically connected to the welding portion 7 through the first connection segment 41 1a, and the connection sheet 3 is electrically connected to the welding portion 7 through the second connection segment 411b.

Specifically, when the sampling portion 4 samples the battery core 2 through the first connection segment 411a, the connection sheet 3 may apply a voltage to the housing 21 through the second connection segment 411b, and a safety circuit may be arranged on the second connection segment 411b. The first sampling terminal 411 is formed after the first connection segment 411a and the second connection segment 411b are integrally formed. One end of the first sampling terminal 411 is connected to the welding portion 7, and the other end of the first sampling terminal 411 is connected to the connection sheet 3. The middle position of the first sampling terminal 411 may be welded to the housing 21 of the battery core 2. That is, voltage application to the housing 21 of the battery core 2 and the sampling of the sampling portion 4 may be achieved at the same time by only welding a middle part of the first sampling terminal 411 once, which simplifies a structure of the first sampling terminal 411 and reduces time cost of production.

Optionally, referring to FIG. 2 to FIG. 7, the sampling assembly includes a protection portion 5. One end of the protection portion 5 is electrically connected to the sampling terminal 41 and the welding portion 7, and the other end of the protection portion 5 is connected to the connection sheet 3.

Specifically, after a voltage is applied to the housing 21 through the connection sheet 3, since the connection sheet 3 is directly connected to a terminal of the battery core 2, to avoid the damage to the housing 21 by the connection sheet 3 when the voltage is too high, the protection portion 5 may be arranged between the connection sheet 3 and the welding portion 7 of the housing 21. The protection portion 5 may be specifically a fuse protector (a fuse protection circuit), a fuse wire, or the like, so as to ensure stability of the voltage on the housing 21.

Optionally, the sampling portion 4 and the protection portion 5 are at least one of an FPC or a PCB. In addition, referring to FIG. 2 to FIG. 5, the sampling portion 4 and the protection portion 5 may be integrally formed into an assembly.

Specifically, the assembly may have an assembly substrate, for example, the assembly substrate may be a PCB substrate or a FPC substrate. Both the sampling portion 4 and the protection portion 5 may be formed on the assembly substrate, so as to improve the integrity and compactness of the sampling portion 4 and the protection portion 5.

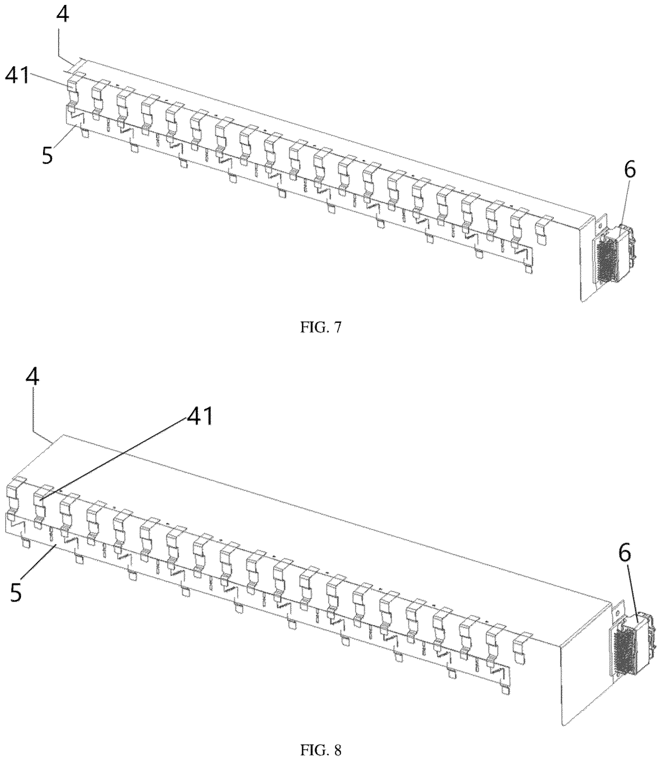

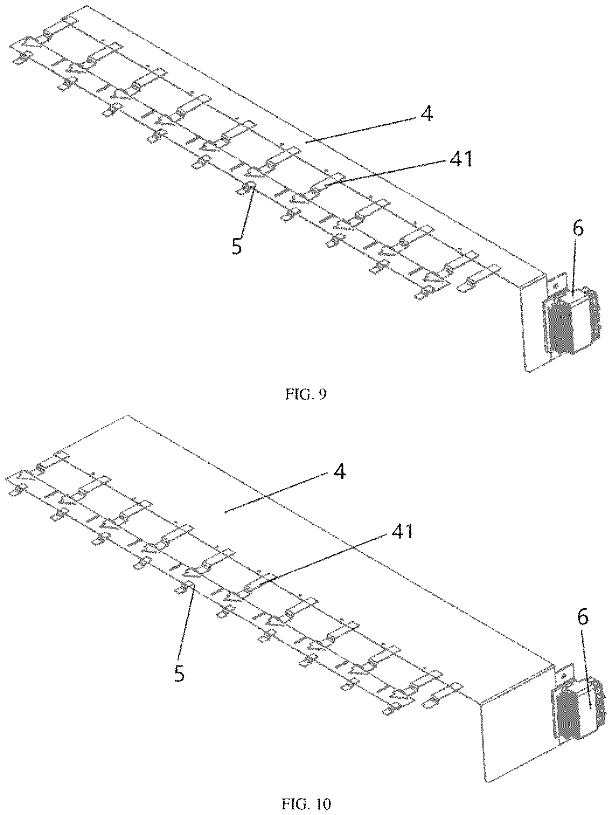

Optionally, the sampling portion 4 and the protection portion 5 are PCBs or double-sided FPCs. Referring to FIG. 2 and FIG. 3, in a case that the sampling portion 4 and the protection portion 5 are the PCBs, the sampling portion 4 and the protection portion 5 may be formed on the PCB substrate together, so that the assembly forms the PCB. The PCB may be an integrated battery information collector (BIC). Through an arrangement of a PCB assembly, performance of the sampling portion 4 and the protection portion 5 can be ensured, and impact of electromagnetic interference on the sampling portion 4 and the protection portion 5 can be reduced by using good Electromagnetic Compatibility (EMC) of the PCB. In a case that the sampling portion 4 and the protection portion 5 are FPCs, the sampling portion 4 and the protection portion 5 may be two independent two FPCs respectively, referring to FIG. 4 to FIG. 9. Alternatively, a circuit of the sampling portion 4 may be etched on one side of the FPC substrate, as shown in FIG. 7, and a circuit of the protection portion 5 may be etched on the other side of the FPC substrate, as shown in FIG. 8, so as to form the double-sided FPC, as shown in FIG. 9.

Optionally, referring to FIG. 1 to FIG. 3, the sampling portion 4 is arranged at a top side of the battery core assembly.

Specifically, the two opposite ends of the battery core 2 are provided with the terminals 23, the battery core 2 is transversely placed in a frame 1, and the top side of the battery core assembly has a flat top surface, so a width dimension of the sampling portion 4 (that is, a dimension in an extending direction of the battery core 2) is not affected by structures such as the terminals on a side surface of the battery core 2, and a height of the side surface of the battery core 2 will not affect the dimension of the sampling portion 4 when the sampling portion 4 is arranged at the top side of the battery core assembly. The width dimension of the sampling portion 4 may be flexibly adjusted. For example, a width of the sampling portion 4 may be made wider, such as a change of the sampling portion 4 in FIG. 8 relative to the sampling portion 4 in FIG. 7, and a change of the sampling portion 4 in FIG. 10 relative to the sampling portion 4 in FIG. 9, so as to meet a space required by wiring in the sampling portion 4.

Moreover, the sampling portion 4 may not overlap with a high-voltage loop at an end portion of the battery core 2, which reduces a risk of the EMC of the sampling portion 4.

Optionally, referring to FIG. 1 to FIG. 3, and FIG. 7 and FIG. 8, the protection portion 5 is arranged at an end portion of the battery core assembly provided with the terminal 23.

Specifically, the two opposite ends of the battery core 2 are provided with the terminals 23, that is, the multiple connection sheets 3 are arranged at both ends of the battery core assembly. To facilitate arranging the protection portion 5 between the connection sheet 3 and the housing 21, the protection portion 5 may be arranged at the end portion of the battery core assembly. The sampling portion 4 is arranged at the top side of the battery core assembly, and the sampling portion 4 and the protection portion 5 may form structures perpendicular to each other, so that the protection portion 5 and the connection sheet 3 are located at the same end of the battery core 2. In this way, the connection sheet 3 may be conveniently connected to the housing at a corresponding end of the battery core 2 through the protection portion 5 to simplify a structure of the protection portion 5.

Optionally, referring FIG. 9 and FIG. 10, the protection portion 5 is arranged in parallel to the sampling portion 4.

Specifically, since the connection sheet 3 is directly connected to the terminal 23 of the battery core 2, to avoid the interference of the connection sheet 3 on the protection portion 5 when the voltage is too high, the protection portion 5 may be arranged in parallel to the sampling portion 4. The sampling portion 4 is arranged on the top side of the battery core assembly, that is, the protection portion 5 may alternatively be arranged at the top side of the battery core assembly or in a space higher than the battery core assembly, so as to ensure stable performance of the protection portion 5.

Optionally, referring to FIG. 1, the sampling portion 4 is a first flexible connection member, and the first flexible connection member is inserted into and matches the sampler 6 through a plug connector.

Specifically, the first flexible connection member may be an FPC, a flexible flat cable (FFC), or a flexible conductive cable (FDC), and a width of the first flexible connection member is adjustable. In a case that the first flexible connection member is electrically connected to the housing 21 of each of the battery cores 2, the sampler 6 may process the battery core information of each of the battery cores 2 collected by the first flexible connection member after the plug connector is inserted into and matches the sampler 6. Since the first flexible connection member has a flexible structure, a position and an extending direction of the first flexible connection member may be flexibly set, which improves the structural flexibility of the sampling portion 4.

Optionally, referring to FIG. 1 to FIG. 2, the protection portion 5 is a second flexible connection member, and a protection circuit connected to the connection sheet 3 and the housing 21 is arranged in the second flexible connection member.

Specifically, the second flexible connection member may be an FPC, an FFC, or an FDC. One end of the second flexible connection member may be electrically connected to the connection sheet 3, and the other end of the second flexible connection member may be connected to the housing 21, so as to apply a voltage to the housing 21 of the battery core 2 through the connection sheet 3. To avoid the damage to the housing 21 caused by the connection sheet 3 when the voltage is too high, a protection circuit connected to the connection sheet 3 and the housing 21 may be arranged in the second flexible connection member. The protection circuit may be a fuse protector (a fuse protection circuit), a fuse wire, or the like, so as to ensure the structural integrity of the housing 21.

Optionally, the battery module 100 further includes a frame 1; and the multiple battery cores 2 are arranged in the frame 1 side by side.

Specifically, referring to FIG. 2, the frame 1 may include a lower plate 11, an upper plate 12, and side plates 13. The side plates 13 are connected between the lower plate 11 and the upper plate 12. The lower plate 11, the upper plate 12, and the side plates 13 form an accommodation cavity 14 in a manner of bonding, welding, or threaded connection. The battery core assembly is arranged in the accommodation cavity 14 in the frame 1. The frame 1 may provide support and protection for the battery core assembly.

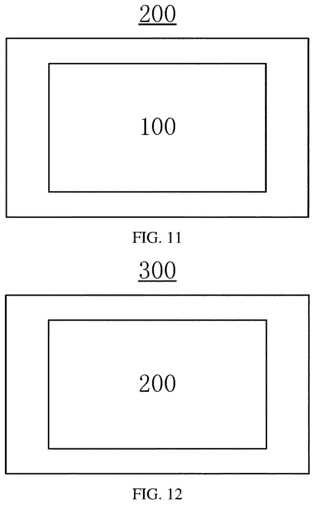

Refer to FIG. 11, which is a schematic diagram of a battery pack according to an embodiment of the present disclosure. The present disclosure further provides a battery pack 200. The battery pack 200 includes at least one of the battery modules 100.

Specifically, the battery pack 200 may serve as a power battery of a vehicle. The battery module 100 includes a battery core assembly and a sampling assembly. The battery core assembly includes multiple battery cores 2. Two opposite ends of the battery core 2 are provided with terminals. The multiple battery cores 2 are sequentially connected in series through connection sheets 3. The battery core 2 includes a housing 21. The connection sheet 3 connected to a positive electrode of each of the battery cores 2 is electrically connected to the housing 21 of the corresponding battery core 2. After a voltage is applied to the housing 21 through the sampling assembly, that is, the housing 21 has the voltage, the damage caused by infiltrating the housing 21 by an electrolyte in the battery core 2 can be reduced, the integrity and stability of the housing 21 are ensured, and the use safety of the battery module 200 is improved.

Referring to FIG. 12, which is a schematic diagram of a vehicle according to an embodiment of the present disclosure. The embodiments of the present disclosure further provides a vehicle 300. The vehicle includes a battery pack 200. At least one of the battery modules 100 is arranged in the battery pack 200.

Specifically, the battery module 100 of the vehicle 300 includes a battery core assembly and a sampling assembly. The battery core assembly includes multiple battery cores 2. Two opposite ends of the battery core 2 are provided with terminals. The multiple battery cores 2 are sequentially connected in series through connection sheets 3. The battery core 2 includes a housing 21. The connection sheet 3 connected to a positive electrode of each of the battery cores 2 is electrically connected to the housing 21 of the corresponding battery core 2. After a voltage is applied to the housing 21 through the sampling assembly, that is, the housing 21 has the voltage, the damage caused by infiltrating the housing 21 by an electrolyte in the battery core 2 can be reduced, the integrity and stability of the housing 21 are ensured, and the use safety of the vehicle 300 is improved.

Although some specific embodiments of the present disclosure have been described in detail by way of examples, those skilled in the art are to be understood that the foregoing examples are only for description and are not intended to limit the scope of the present disclosure. Those skilled in the art are to be understood that modifications may be made to the foregoing embodiments without departing from the scope and spirit of the present disclosure. The scope of the present disclosure is limited by appended claims.

## Claims

1. A battery module (100), comprising:
a battery core assembly, the battery core assembly comprising a plurality of battery cores (2), two opposite ends of each battery core (2) of the plurality of the battery cores (2) being provided with terminals (23), the plurality of the battery cores (2) being sequentially connected in series through connection sheets (3), each battery core (2) comprising a housing (21), and the connection sheet (3)connected to a positive electrode of each battery core (2) being electrically connected to the housing (21) of the corresponding battery core (2) on a positive electrode side of the battery core assembly; and
a sampling assembly, the housing (21) on a negative electrode side (N) of the battery core assembly being electrically connected to the connection sheet (3) through the sampling assembly.

2. The battery module (100) according to claim 1, wherein the sampling assembly comprises a sampling portion (4), the sampling portion (4) comprises a sampling terminal (41) and an output terminal (42), and the sampling terminal (41) is electrically connected to the housing (21) and/or the connection sheet (3).

3. The battery module (100) according to claim 2, wherein welding portions (7) are arranged on the housing (21), and the sampling portion (4) is electrically connected to the welding portions (7) through the sampling terminal (41).

4. The battery module (100) according to claim 3, wherein the sampling terminal (41) comprises a first sampling terminal (411) and a second sampling terminal (412), the first sampling terminal (411) is electrically connected to one of the welding portions (7) and to the connection sheets (3), and the second sampling terminal (412) is electrically connected to another welding portion (7).

5. The battery module (100) according to claim 4, wherein the first sampling terminal (411) comprises a first connection segment (411a) and a second connection segment (411b), the sampling portion (4) is electrically connected to the welding portion (7) through the first connection segment (411a), and the connection sheet (3) is electrically connected to the welding portion (7) through the second connection segment (41 1b).

6. The battery module (100) according to claim 5, wherein the first sampling terminal (411) is configured to collect information in the battery core (2) by the sampling portion (4) through the welding portion (7), and to apply a voltage to the housing (21) through the connection sheet (3); and
the second sampling terminal (412) is configured to collect the information in the battery core (2) by the sampling portion (4) through the welding portion (7).

7. The battery module (100) according to any one of claims 3 to 6, wherein the sampling assembly comprises a protection portion (5), one end of the protection portion (5) is electrically connected to the sampling terminal (41) and the welding portion (7), and the other end of the protection portion (5) is connected to the connection sheet (3).

8. The battery module (100) according to claim 7, wherein the sampling portion (4) and the protection portion (5) are at least one of a flexible printed circuit (FPC) or a printed circuit board (PCB).

9. The battery module (100) according to claim 7 or 8, wherein the sampling portion (4) and the protection portion (5) are integrally formed.

10. The battery module (100) according to any one of claims 7 to 9, wherein the sampling portion (4) is arranged at a top side of the battery core assembly, and the protection portion (5) is arranged parallel to the sampling portion (4).

11. The battery module (100) according to any one of claims 7 to 9, wherein the sampling portion (4) is perpendicular to the protection portion (5).

12. The battery module (100) according to any one of claims 7 to 11, wherein the protection portion (5) is arranged on one side of the battery core assembly provided with the terminal (23).

13. The battery module (100) according to any one of claims 1 to 12, wherein the sampling portion (4) is a first flexible connection member, and the first flexible connection member is inserted into and matches a sampler (6).

14. The battery module (100) according to any one of claims 7 to 13, wherein the protection portion (5) is a second flexible connection member, and a protection circuit connected to the connection sheet (3) and the housing (21) is arranged in the second flexible connection member.

15. The battery module (100) according to claim 14, wherein the protection circuit comprises a fuse protector or a fuse wire.

16. The battery module (100) according to any one of claims 1 to 15, further comprising a frame (1); and
the plurality of the battery cores (2) being arranged in the frame (1) side by side.

17. A battery pack (200), comprising the battery module (100) according to any one of claims 1 to 16.

18. A vehicle (300), comprising the battery module (100) according to any one of claims 1 to 16 and the battery pack (200) according to claim 17.
